# EUROPEAN PATENT SPECIFICATION

(11) **EP 4 177 171 B1**
(45) Date of publication and mention of the grant of the patent: **03.12.2025**
(21) Application number: 22200689.2
(22) Date of filing: 10.10.2022
(51) Int. Cl.: B64F 5/50

(54) **METHOD AND SYSTEM FOR TRANSPORTING A WORKPIECE IN A MANUFACTURING ENVIRONMENT**
VERFAHREN UND SYSTEM ZUM TRANSPORT EINES WERKSTÜCKS IN EINER FERTIGUNGSUMGEBUNG
PROCÉDÉ ET SYSTÈME DE TRANSPORT D'UNE PIÈCE DANS UN ENVIRONNEMENT DE FABRICATION

(30) Priority: 03.11.2021 US 202163275020 P; 19.11.2021 NL 2029839
(43) Date of publication of application: 10.05.2023
(73) Proprietor: The Boeing Company, Arlington, VA 22202 (US)
(72) Inventor: Moore, Matthew B., HUNTINGTON BEACH, 92647 (US); Stone, Patrick B., HUNTINGTON BEACH, 92647 (US)
(74) Representative: Arnold & Siedsma

(56) References cited:
- WO-A2-03/037564
- CN-A- 110 239 741
- CN-U- 206 579 860
- DE-A1- 102013 006 506
- KR-A- 20160 081 556
- US-A1- 2010 011 563
- US-A1- 2010 038 024
- US-B2- 9 132 924

## Description

### Field

This application relates to the manufacturing of structures and, more specifically, to methods and systems for transporting aerospace structures during manufacturing.

### Background

Manufacturing of large structures in the aerospace industry typically requires manual processing, manually placing the structure into a workstation, and manually moving it out of the workstation

Challenges arise related to proper orientation and support of large structures within a work cell, specifically in work cells utilizing overhead mechanical equipment. Other difficulties arise related to movement of large structures into and out of work cells, and more particularly to automated transfer of large structures.

US2010/038024 states in its abstract: Until now, an orientation pattern has been projected onto the skin by means of lasers. The stringers provided with an adhesive film are then positioned by hand on the skin and fixed by pressure weights. A precision of ±3 mm is thus achieved. The fine positioning takes place by means of comb templates. The templates are set one after the other, pressure weights being removed from the stringers after each setting, so a manual orientation of the stringers is made possible. The weights are then set again. The imprecision is still ±1.4 mm. This procedure is very time-consuming and not precise enough. It is therefore proposed to use a gantry robot with a gripper beam to position the stringers, the gantry robot cooperating with a loading unit and a heating station. The time spent is thus substantially reduced and the precision of the product is decisively increased.

US2010/011563 states in its abstract: A flexible fastening machine tool having first and second facing pedestals is mounted on first and second pairs of rails. The pedestals are movable along the rails in a Y-axis direction. A rail base is provided and the second pair of rails is mounted on the rail base. A third pair of rails that extend in an X-axis direction are mounted to the floor, and the rail base is positioned on the third pair of rails, such that the second pedestal is movable along the third pair of rails in the X-axis direction toward and away from the first pedestal. A first movable carriage is mounted on the first pedestal and a second movable carriage is mounted on the second pedestal. A frame member is supported by the first and second carriages and the frame member holds a workpiece. The first and second carriages are independently movable toward and away from the first and second pairs of rails such that the fixture frame is capable of being raised, lowered and tilted. A C-frame is mounted on the third pair of rails and the C-frame is capable of performing tooling operations on the workpiece.

KR2016/0081556 states in its abstract: The present invention relates to an apparatus for vertically moving and rotating a tool, comprising: a pair of vertical transfer carriages spaced apart from each other, fixed to a bottom, and formed in a vertical direction; a vertical movement unit coupled to each of the vertical transfer carriages and adjusted in height in the vertical direction; and a rotating unit coupled to each of the vertical movement unit, formed such that a rotational shaft thereof is rotatable centered on a traverse shaft in a mutually facing direction and an angle at which the rotational shaft is rotated is adjustable, and having a tool coupling part allowing a tool to be coupled and fixed to the rotational shaft. Since the tool is fixed to the tool coupling part of the rotating unit, the tool supporting a component can be easily adjusted vertically and a less space is required, and since the tool in which the component is installed and fixed is rotatable, a worker is able to perform an operation within the component in a standing posture.

KR2016/0081556 further discloses in paragraph 42: In addition, a worker detection sensor 720 is installed in the workspace 710 in which the worker is located, and the pair of vertical transport carriage 100 and the main control panel 510 except for the workspace 710 are fixed. A safety sensor 730 is installed on the bottom surface including a part to detect a movement. When the worker is sensed by the worker sensor 720 and the movement is sensed by the safety sensor 730, the remote controller 520 is only reminded. It is possible to control the operation of the up and down moving unit 200 and the rotating unit 300, and if the worker is not detected by the worker detection sensor 720, even if the movement is detected by the safety sensor 730, the main control panel 510 and the remote control It may be configured to control the operation of the up and down moving unit 200 and the rotating unit 300 using the (520). KR2016/0081556 further discloses in paragraph 43 that, when another worker operates the main control panel 510 while the worker is working in the work space 710, the worker may be in danger, so that the worker has a work space near the part 600 in order to prevent a safety accident. If it is at 710 (when a worker is detected by a worker detection sensor and no other worker, object, and movement are detected by a safety sensor), the operation can be controlled only by the remote controller 520 that the worker has. Even if the operator operates the main control panel 510 can be prevented from operating. And when the worker is on the floor 700 other than the workspace 710, there is no risk of a safety accident can be controlled by using one of the main control panel 510 and the remote control 520. KR2016/0081556 further discloses in paragraph 44 that, as described above, a work sensor 720 may be formed in the work space 710 to detect whether a worker exists, and a safety sensor 730 is installed on the floor 700 except for the work space 710. Worker safety can be ensured. In addition, the worker detection sensor 720 and the safety sensor 730 may be formed in various numbers and types, the worker detection sensor 720 may be installed on the floor of the work space 710, and the safety sensor 730 may work. It may be installed on the bottom surface 700 except the space 710. In addition, the safety sensor 730 may be formed of a variety of sensors that can detect the presence or absence of movement and objects, and may be installed in the form of a fence along with a sensor installed on the bottom surface.

Accordingly, those skilled in the art continue with research and development efforts in the field of manufacturing large aerospace structures.

### Summary

Disclosed are methods for transporting a workpiece from an initial work cell to a subsequent work cell in a manufacturing environment having a plurality of work cells, the workpiece being supported by a support beam.

In one example, the method includes monitoring the initial work cell for presence of a ready-to-move condition. The method further includes monitoring the subsequent work cell for presence of a ready-to-receive condition. When both the ready-to-move condition and the ready-to-receive condition are present, the method includes interfacing the support beam with a gantry. After the interfacing, the method includes moving the support beam with the gantry from the initial work cell to the subsequent work cell.

Also disclosed are systems for transporting a workpiece from an initial work cell to a subsequent work cell in a manufacturing environment having a plurality of work cells, the workpiece being supported by a support beam.

In one example, the system includes an initial work cell sensor positioned to monitor the initial work cell for presence of a ready-to-move condition. The system further includes a subsequent work cell sensor positioned to monitor the subsequent work cell for presence of a ready-to-receive condition. The system further includes a gantry configured to interface with the support beam and move the support beam from the initial work cell to the subsequent work cell once both the ready-to-move condition and the ready-to-receive condition are present.

### Brief description of the drawings

FIG. 1 is a flow chart of a method for transporting a workpiece from an initial work cell to a subsequent work cell in a manufacturing environment;
FIG. 2 is a perspective view of a system for transporting a workpiece from an initial work cell to a subsequent work cell in a manufacturing environment;

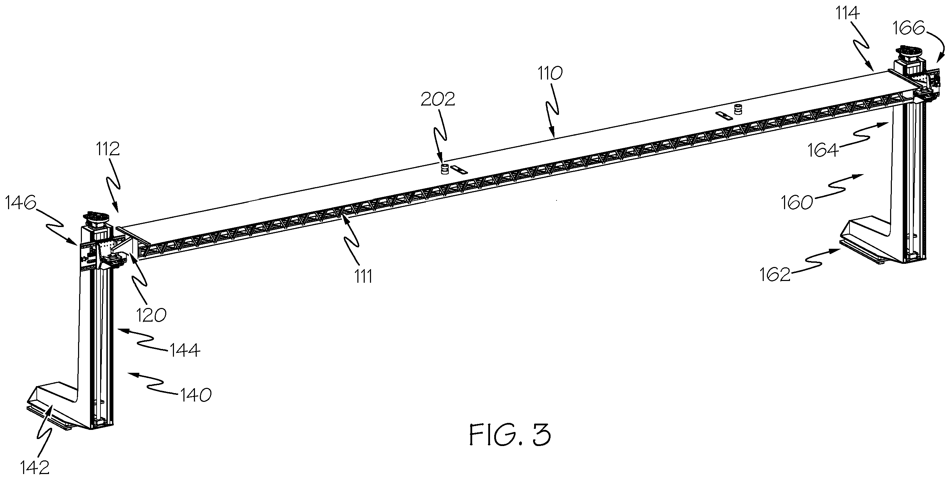

FIG. 3 is a perspective view of a portion of the system of FIG. 2;
FIG. 4 is perspective view of a portion of the system of FIG. 2;
FIG. 5 is a perspective view of a portion of the system of FIG. 2;
FIG. 6 is a perspective view of a portion of the system of FIG. 2;
FIG. 7A is a perspective view of a portion of the system of FIG. 2;
FIG. 7B is a perspective view of a portion of the system of FIG. 2;
FIG. 8 is a perspective view of a portion of the system of FIG. 2;
FIG. 9 is a perspective view of a portion of the system of FIG. 2;
FIG. 10 is a block diagram of a control system of the system of FIG. 1;
FIG. 11 is a flow diagram of a method for transporting a workpiece from an initial work cell to a subsequent work cell in a manufacturing environment;
FIG. 12 is a flow diagram of an aircraft manufacturing and service methodology; and
FIG. 13 is a schematic illustration of an aircraft.

### Detailed description

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

Illustrative, non-exhaustive examples, which may be, but are not necessarily, claimed, of the subject matter according to the present disclosure are provided below. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

References throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

The system 100 and method 600 may be automated such that each step of the method 1000 is performed automatically based upon data 929 analysis and commands received from a control system 700. Further, any reference to moving or a movable component of the disclosed system 100 and method 1000 may refer to automated movement based upon workpiece 50 geometry and position within the system 100. For example, movement may automatically occur to position the workpiece 50 in a desired location within a work cell 30a of the system 100 for the work to be performed in that work cell on that particular shape and size of workpiece 50. Movement may include movement along any axis or plane needed to position the workpiece 50 properly within the work cell.

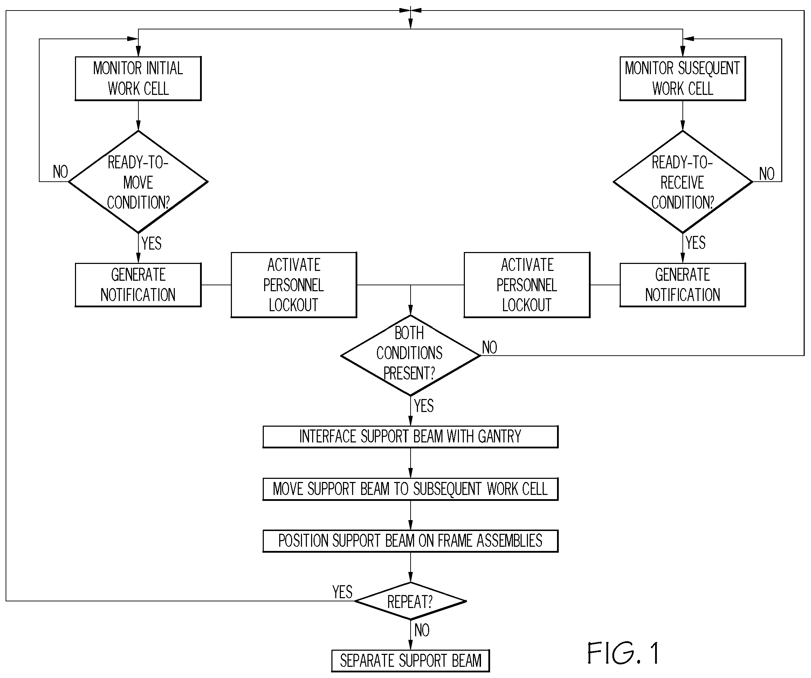

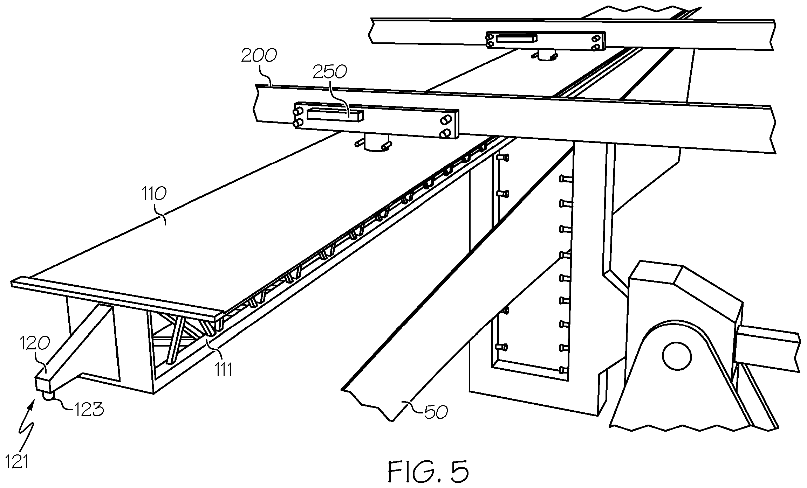

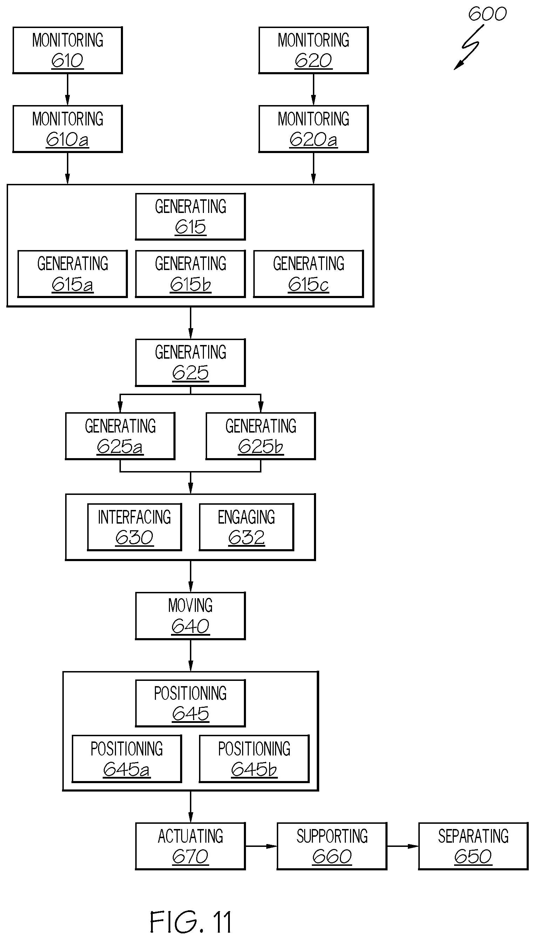

Referring to FIG. 1 and FIG. 11, disclosed is a method 600 for transporting a workpiece 50 from an initial work cell 30a to a subsequent work cell 30b in a manufacturing environment 10. The manufacturing environment 10 includes a plurality of work cells 30. The workpiece 50 is supported by a support beam 110. Referring to FIG. 5, in one example, the support beam 110 includes a truss 111. In another example, the support beam 110 includes a metallic material and is rigid.

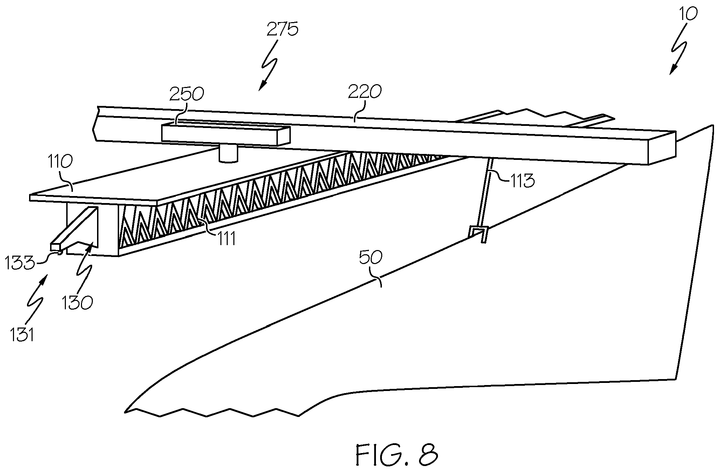

The workpiece 50 may be suspended from the support beam 110 by a hanger 113, see FIG. 8. In one example, the workpiece 50 is a wing panel 52 of an aircraft 1302. In another example, the workpiece 50 includes a composite material 325, the composite material 325 comprising a reinforcement material embedded in a polymeric matrix material.

In one example, the method 600 includes monitoring 610 the initial work cell 30a for presence of a ready-to-move condition. The monitoring 610 may utilize an initial work cell sensor 185 positioned to monitor the initial work cell 30a for presence of a ready-to-move condition. The initial work cell sensor 185 may sense data and share it with a control system 700 for analysis. In one example, the ready-to-move condition is present when work on the workpiece 50 within the initial work cell 30a is complete.

In one example, the monitoring 610 the initial work cell 30a comprises monitoring an initial work cell sensor 185. The initial work cell sensor 185 may include at least one of a motion sensor 183, a laser sensor 181, a pressure sensor 187, a radar device 189, an RFID device 191, and a wireless device 193 to ascertain presence of personnel within the initial work cell 30a.

Still referring to FIG. 11, the method 600 includes monitoring 620 the subsequent work cell 30b for presence of a ready-to-receive condition. The monitoring 620 may utilize a subsequent work cell sensor 195 positioned to monitor the subsequent work cell 30b for presence of a ready-to-receive condition. In one example, the ready-to-receive condition is present when the subsequent work cell 30b is devoid of a workpiece 50. In another example, the ready-to-receive condition is present when a signal is received indicating that the subsequent work cell 30b is devoid of a workpiece 50. In yet another example, the ready-to-receive condition is present when the subsequent work cell 30b is devoid of a workpiece 50 and devoid of personnel.

Referring to FIG. 11, when both the ready-to-move condition and the ready-to-receive condition are present, the method 600 includes interfacing 630 the support beam 110 with a gantry 200. Further, after the interfacing 630, the method 600 includes moving 640 the support beam 110 with the gantry 200 from the initial work cell 30a to the subsequent work cell 30b.

In one example, the method 600 includes, automatically upon the presence of the ready-to-move condition, generating 615 a notification instructing all personnel to leave the initial work cell 30a. The generating 615 may be achieved with a control system 700 configured to analyzed sensed data and determine the presence of the ready-to-move condition. In one example, the generating 615 the notification includes at least one of generating 615a an audible notification, generating 615b a visual notification, and generating 615c a wireless broadcast.

In one example, the ready-to-move condition is present when a signal is received indicating that work on the workpiece 50 within the initial work cell 30a is complete. In another example, the ready-to-move condition is present when work on the workpiece 50 within the initial work cell 30a is complete and the initial work cell 30a is devoid of personnel.

In one example, the method 600 includes, automatically upon the presence of the ready-to-receive condition, generating 625 a notification instructing all personnel to leave the subsequent work cell 30b. The generating 625 the notification may include at least one of generating 625a an audible notification and generating 625b a visual notification.

In one example, the monitoring 620 the subsequent work cell 30b includes monitoring at least one of a laser sensor 181 and a pressure sensor 187 to ascertain presence of personnel within the subsequent work cell 30b.

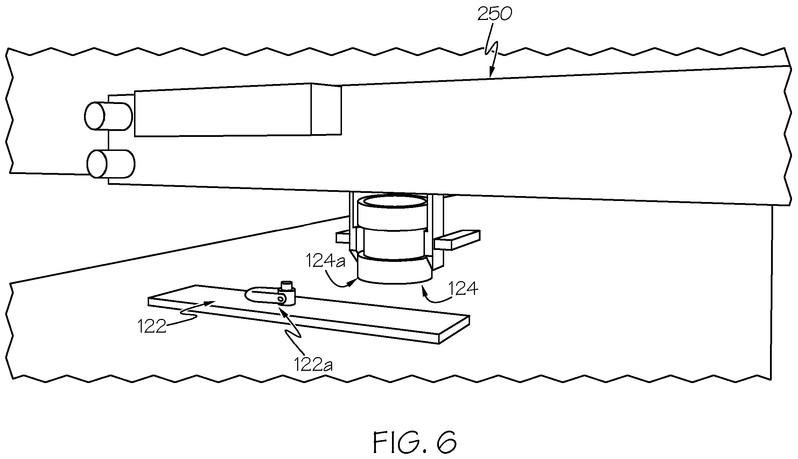

Referring to FIG. 6, the support beam 110 includes a first coupling feature 122. In one example, the interfacing 630 the support beam 110 with the gantry 200 includes engaging the first coupling feature 122 on the support beam 110 with a second coupling feature 124 on the gantry 200. The first coupling feature 122 on the support beam 110 may include a male coupling portion 122a and the second coupling feature 124 on the gantry 200 may include a female coupling portion 124a. In another example, the interfacing 630 the support beam 110 with the gantry 200 may include raising the support beam 110 along the vertical axis V into engagement with the gantry 200.

The interfacing 630 the support beam 110 with the gantry 200 may include sensing whether the second coupling feature 124 on the gantry 200 has securely engaged the first coupling feature 122 on the support beam 110. In one example, the interfacing 630 the support beam 110 with the gantry 200 includes interfacing using a feedback control loop.

In one example, the support beam 110 comprises at least two of the first coupling feature 122. The interfacing 630 the support beam 110 with the gantry 200 may include engaging 632 the at least two of the first coupling feature 122 on the support beam 110 with at least two of the second coupling feature 124 that correspond on the gantry 200.

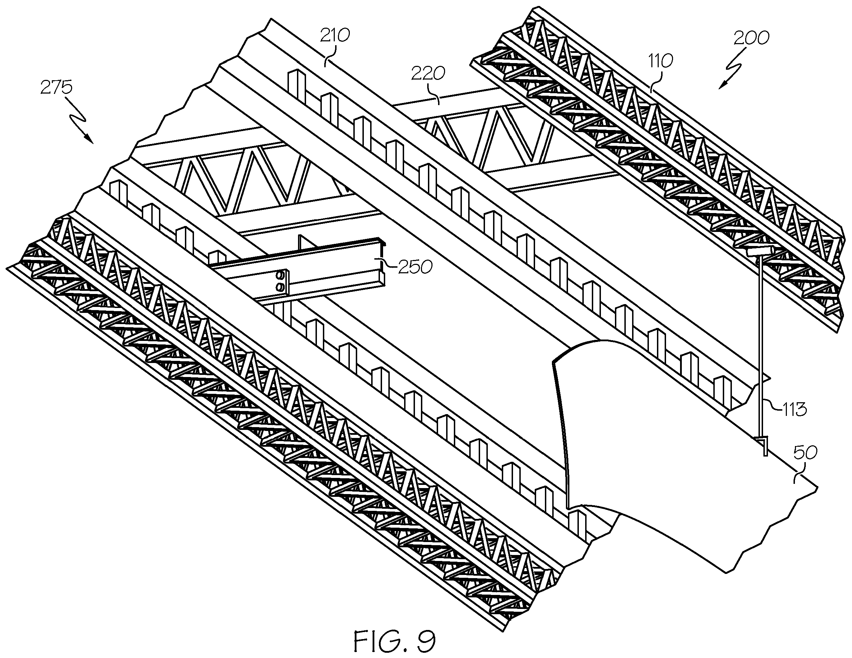

Referring to FIG. 9, the gantry 200 includes a first elongated rail member 210 and a second elongated rail member 220 moveably engaged with the first elongated rail member 210. The gantry 200 further includes a trolley 275 that is moveably engaged with the second elongated rail member 220. The trolley 275 is coupled with an interfacing member 250, see FIG. 6, configured to engage with second coupling feature 124. The trolley 275 facilitates movement of workpiece 50 throughout the manufacturing environment 10.

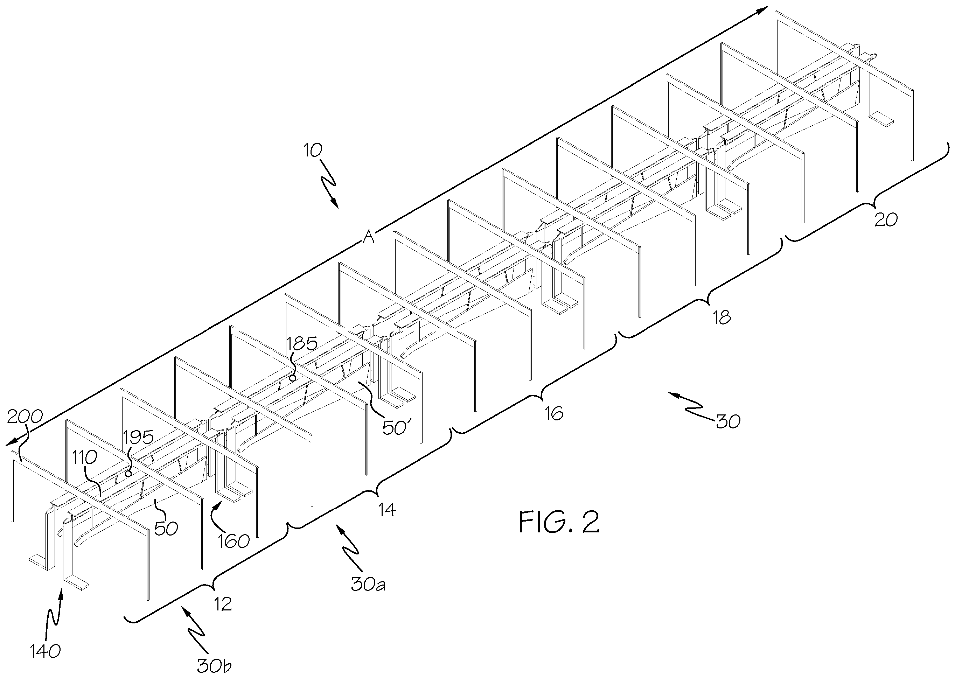

Referring to FIG. 2, in one or more examples, the plurality of work cells 30 are arranged along a longitudinal manufacturing environment axis A. The first elongated rail member 210, see FIG. 9, is aligned with the longitudinal manufacturing environment axis A. In one example, the second elongated rail member 220 is transverse to the first elongated rail member 210 and moves relative to the first elongated rail member 210 along the longitudinal manufacturing environment axis A.

In one example, the moving 640 the support beam 110 with the gantry 200 includes moving 640 the support beam 110 in only two directions, the two directions defining a plane P that is generally perpendicular to a vertical axis V of the manufacturing environment 10. The moving 640 may be automated such that it positions the support beam 110 based upon geometry of the workpiece 50 and work cell, example 30a, parameters.

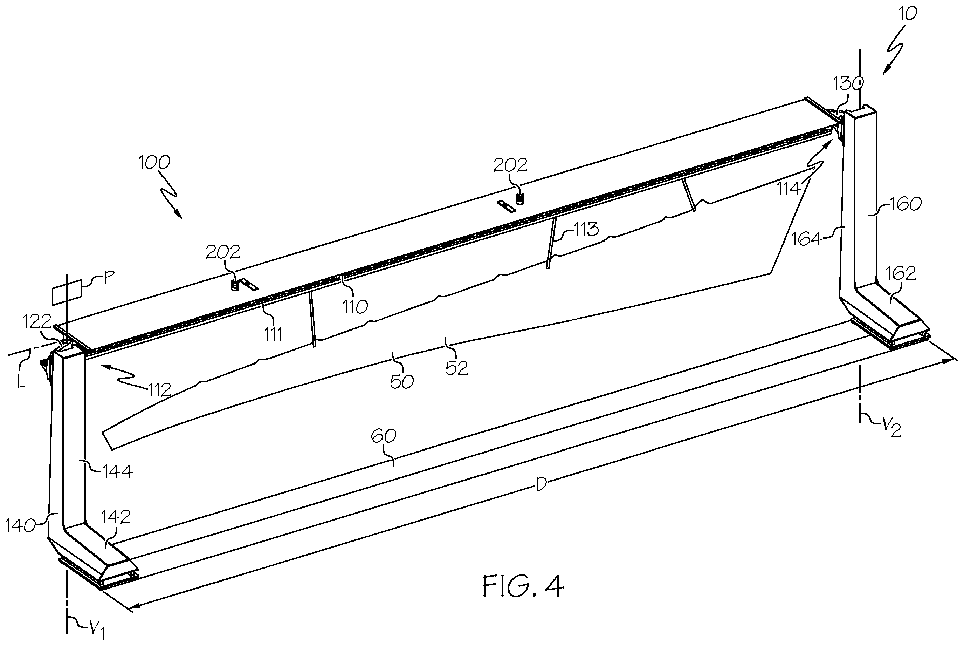

The method 600 may further include, once the support beam 110 is in the subsequent work cell 30b, positioning 645 the support beam 110 onto a first frame assembly 140 and a second frame assembly 160. Referring to FIG. 4. in one example, the first frame assembly 140 is spaced a distance D apart from the second frame assembly 160. In one example, the distance D may be at least about 1 meter. The distance D may be at least about 2 meters. In another example, the distance D may be at least about 3 meters

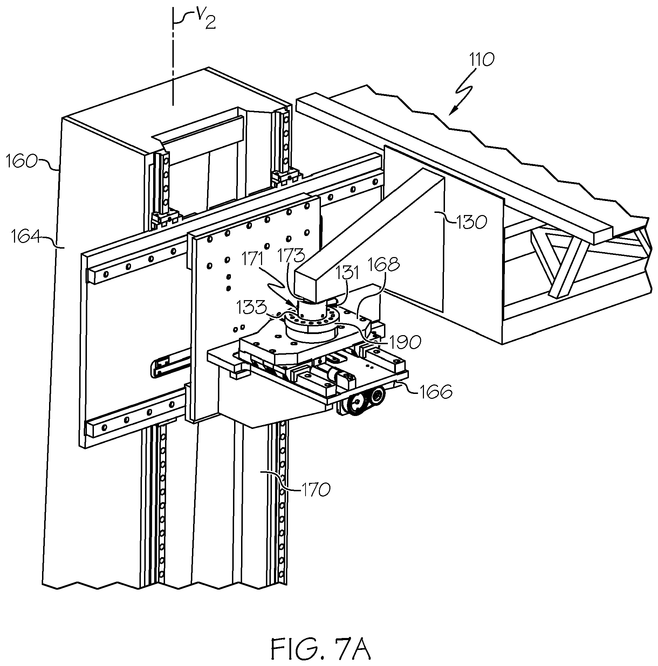

Referring to FIG. 4, the support beam 110 is elongated along a longitudinal support beam axis L and includes a first end portion 112 and a second end portion 114 longitudinally opposed from the first end portion 112. The support beam 110 further includes a first beam-side indexing feature 120 proximate the first end portion 112 and a second beam-side indexing feature 130 proximate the second end portion 114, see FIG. 7A.

In one example, the first frame assembly 140 includes a first base portion 142, a first riser portion 144 defining a first vertical axis V1, and a first carriage 146. The first carriage 146 is connected to the first riser portion 144 and is moveable relative to the first riser portion 144 along the first vertical axis V1. In one example, the first carriage 146 includes a first frame-side indexing feature 148 configured to engage with the first beam-side indexing feature 120.

Referring to FIG. 4, the second frame assembly 160 includes a second base portion 162, a second riser portion 164 defining a second vertical axis V2, and a second carriage 166. The second carriage 166 is connected to the second riser portion 164 and is moveable relative to the second riser portion 164 along the second vertical axis V2. In one example, the second carriage 166 includes a second frame-side indexing feature 168 configured to engage with the second beam-side indexing feature 130.

Referring to FIG. 4, in one example, the first base portion 142 of the first frame assembly 140 is fixedly connected to an underlying floor 60 (e.g., a factory floor). Further, the second base portion 162 of the second frame assembly 160 is fixedly connected to the underlying floor 60 (e.g., a factory floor). In another example, both the first base portion 142 of the first frame assembly 140 and the second base portion 162 of the second frame assembly 160 are fixedly connected to the underlying floor 60.

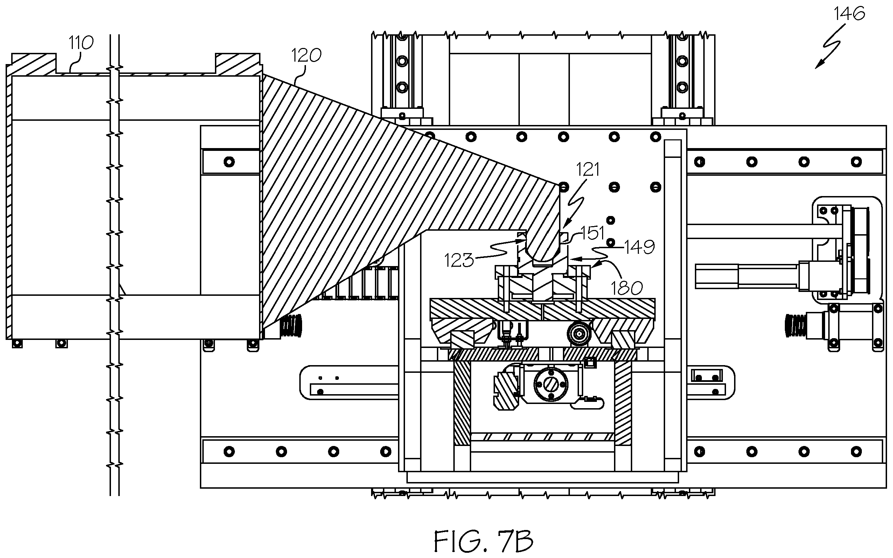

Referring to FIG. 7B, in one example, the first beam-side indexing feature 120 comprises a first male indexing feature 121 and the first frame-side indexing feature 148 comprises a first female indexing feature 149 sized and shaped to closely receive the first male indexing feature 121. The positioning 645a the support beam 110 onto the first frame assembly 140 includes inserting the first male indexing feature 121 into the first female indexing feature 149.

Referring to FIG. 7A, in one example, the second beam-side indexing feature 130 includes a second male indexing feature 131 and the second frame-side indexing feature 168 includes a second female indexing feature 171 sized and shaped to closely receive the second male indexing feature 131. In one example, the positioning 645b the support beam 110 onto the second frame assembly 160 includes inserting the second male indexing feature 131 into the second female indexing feature 171.

Referring to FIG. 7B, in one example, the first male indexing feature 121 includes a first ball member 123 and the first female indexing feature 149 includes a first socket member 151. Referring to FIG. 7A, the second male indexing feature 131 includes a second ball member 133 and the second female indexing feature 171 includes a second socket member 173.

In one example, automatically upon the presence of the presence of the ready-to-move condition, the method 600 includes actuating 670 personnel lockouts 400 to inhibit ingress of personnel into the initial work cell 30a. The actuating 670 may be automated such that it occurs via a command from the control system 700. In one or more examples, the method 600 includes, automatically upon the presence of the presence of the ready-to-receive condition, actuating 670 personnel lockouts 400 to inhibit ingress of personnel into the subsequent work cell 30b.

Referring to FIG. 11, in one or more examples, the method 600 further includes monitoring 610a the subsequent work cell 30b for presence of a second ready-to-move condition and monitoring 620a a still subsequent work cell 30b for presence of a second ready-to-receive condition. In one example, the monitoring 610a and monitoring 620a include sensing with an initial work cell sensor 185 and a subsequent work cell sensor 195, respectively.

In one example, when both the second ready-to-move condition and the second ready-to-receive condition are present, the method 600 includes interfacing 630 the support beam 110 with the gantry 200. The method 600 further includes, after the interfacing 630, moving 640 the support beam 110 with the gantry 200 from the subsequent work cell 30b to the still subsequent work cell 30b.

Referring to FIG. 11, once all work on the workpiece 50 within the manufacturing environment 10 is complete, the method may include separating 650 the workpiece 50 from the support beam 110. After separating 650, the workpiece 50 may be positioned for further processing.

Referring to FIG. 11, the method 600 may further include supporting 660 a second workpiece 50' on the support beam 110. The second workpiece 50' may include a composite material 325, the composite material 325 comprising a reinforcement material embedded in a polymeric matrix material. The second workpiece 50' may be suspended from the support beam 110 by a hanger 113, see FIG. 8.

In one example, the plurality of work cells 30 comprise at least one of a trimming cell 40a, a sanding cell 40b, a washing cell 40c, a non-destructive inspection cell 40d, a painting cell 40e, and a drilling cell 40f, and an assembling cell 40g. The workpiece 50 may automatically move between each of the plurality of work cells 30 via the gantry 200 and control system 700.

In one example, the method 600 includes monitoring 610 the initial work cell 30a for presence of a ready-to-move condition, wherein the ready-to-move condition is present when work on the workpiece 50 within the initial work cell 30a is complete and the initial work cell 30a is devoid of personnel.

The method 600 further includes monitoring 620 the subsequent work cell 30b for presence of a ready-to-receive condition, wherein the ready-to-receive condition is present when the subsequent work cell 30b is devoid of a workpiece 50 and devoid of personnel. Once the ready-to-move condition and the ready-to-receive condition are present, a workpiece 50 located in the initial work cell 30a is authorized to move from the initial work cell 30a to the subsequent work cell 30b.

The method 600 further includes, when both the ready-to-move condition and the ready-to-receive condition are present, engaging 632 a first coupling feature 122 on the support beam 110 with a second coupling feature 124 on a gantry 200. After the engaging 632, the method 600 includes moving 640 the support beam 110 with the gantry 200 from the initial work cell 30a to the subsequent work cell 30b.

In one example, the moving 640 includes moving the support beam 110 in only two directions, the two directions defining a plane P that is generally perpendicular to a vertical axis V of the manufacturing environment 10.

Referring to FIG. 2, disclosed is a system 100 for transporting a workpiece 50 from an initial work cell 30a to a subsequent work cell 30b in a manufacturing environment 10. The manufacturing environment 10 includes a plurality of work cells 30. The workpiece 50 is supported by a support beam 110. In one example, the support beam 110 includes a truss 111. The support beam 110 may include a metallic material and may further be rigid. In one example, the workpiece 50 is suspended from the support beam 110 by a hanger 113, see FIG. 8.

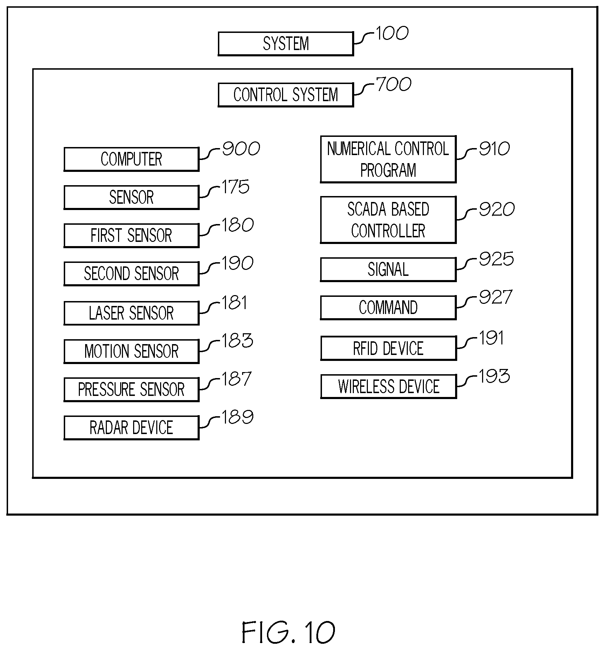

Referring to FIG. 10, in one or more examples, the system 100 includes a control system 700. The control system 700 includes a computer 900. The computer 900 may utilize one or more numerical control program 910 to direct movement of the workpiece 50 within a work cell of the plurality of work cells 30 or between the plurality of work cells 30. The control system 700 may utilize a supervisory control and data acquisition (SCADA) based controller 920 to direct movement and facilitate data analysis.

The system 100 includes an initial work cell sensor 185 positioned to monitor the initial work cell 30a for presence of a ready-to-move condition, see FIG. 2. The initial work cell sensor 185 may include at least one of a motion sensor 183, a laser sensor 181, a pressure sensor 187, a radar device 189, an RFID device 191, and a wireless device 193. The initial work cell sensor 185 may be operatively associated with control system 700 such that sensed data is communicated to the control system 700 for analysis and facilitating movement within the system 100.

Referring to FIG. 2, the system 100 includes a subsequent work cell sensor 195 positioned to monitor the subsequent work cell 30b for presence of a ready-to-receive condition. The subsequent work cell sensor 195 may include at least one of a motion sensor 183, a laser sensor 181, a pressure sensor 187, a radar device 189, an RFID device 191, and a wireless device 193. The subsequent work cell sensor 195 may be operatively associated with control system 700 such that sensed data is communicated to the control system 700 for analysis and facilitating movement within the system 100.

Referring to FIG. 9, the system 100 includes a gantry 200 configured to interface with the support beam 110 and move the support beam 110 from the initial work cell 30a to the subsequent work cell 30b once both the ready-to-move condition and the ready-to-receive condition are present.

Referring to FIG. 4, in one example, the support beam 110 of system 100 includes a first coupling feature 122 and the gantry 200 includes a second coupling feature 124, see FIG. 6. The gantry interfaces with the support beam 110 by engaging the first coupling feature 122 with the second coupling feature 124. The first coupling feature 122 on the support beam 110 may include a male coupling portion 122a and the second coupling feature 124 on the gantry 200 may include a female coupling portion 124a.

Referring to FIG. 9, in one or more examples, the gantry 200 includes a first elongated rail member 210 and a second elongated rail member 220 moveably engaged with the first elongated rail member 210. The system 100 further includes a trolley 275 moveably engaged with the second elongated rail member 220. In one example, the gantry 200 is configured to move the support beam 110 in only two directions, the two directions defining a plane P that is generally perpendicular to a vertical axis V of the manufacturing environment 10.

Referring to FIG. 2, in one or more examples, the plurality of work cells 30 of the system 100 is arranged along a longitudinal manufacturing environment axis A. Further, the first elongated rail member 210, FIG.9, is aligned with the longitudinal manufacturing environment axis A. In one or more examples, the second elongated rail member 220 is transverse to the first elongated rail member 210 and moves relative to the first elongated rail member 210 along the longitudinal manufacturing environment axis A.

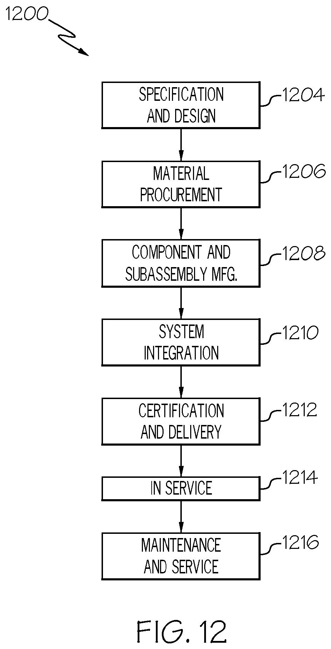

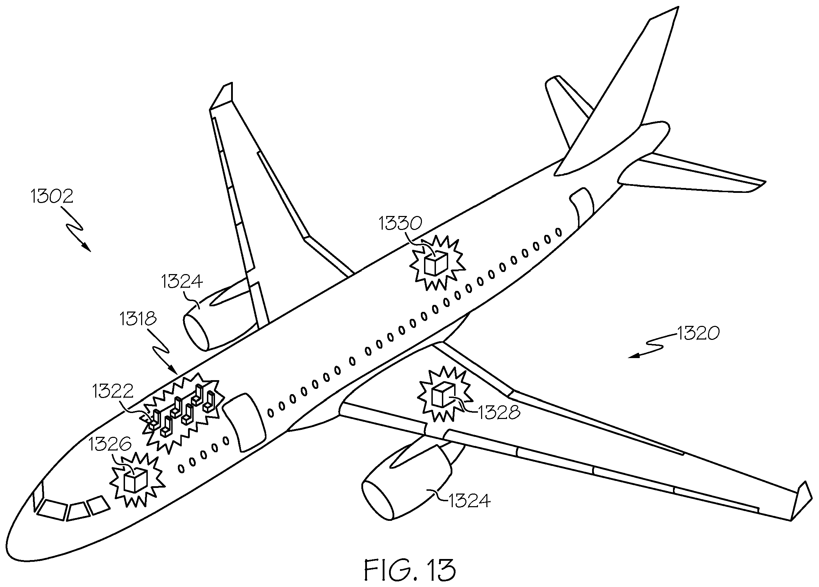

Examples of the subject matter disclosed herein may be described in the context of aircraft manufacturing and service method 1200 as shown in FIG. 12 and aircraft 1302 as shown in FIG. 13. During pre-production, service method 1200 may include specification and design (block 1204) of aircraft 1302 and material procurement (block 1206). During production, component and subassembly manufacturing (block 1208) and system integration (block 1210) of aircraft 1302 may take place. Thereafter, aircraft 1302 may go through certification and delivery (block 1212) to be placed in service (block 1214). While in service, aircraft 1302 may be scheduled for routine maintenance and service (block 1216). Routine maintenance and service may include modification, reconfiguration, refurbishment, etc. of one or more systems of aircraft 1302.

Each of the processes of service method 1200 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 13, aircraft 1302 produced by service method 1200 may include airframe 1318 with a plurality of high-level systems 1320 and interior 1322. Examples of high-level systems 1320 include one or more of propulsion system 1324, electrical system 1326, hydraulic system 1328, and environmental system 1330. Any number of other systems may be included. Although an aerospace example is shown, the principles disclosed herein may be applied to other industries, such as the automotive industry. Accordingly, in addition to aircraft 1302, the principles disclosed herein may apply to other vehicles, e.g., land vehicles, marine vehicles, space vehicles, etc.

The disclosed systems and methods for supporting a workpiece in a manufacturing environment may be employed during any one or more of the stages of the manufacturing and service method 1200. For example, components or subassemblies corresponding to component and subassembly manufacturing (block 1208) may be fabricated or manufactured in a manner similar to components or subassemblies produced while aircraft 1302 is in service (block 1214), such as by employing the disclosed systems and methods for supporting a workpiece 50 in a manufacturing environment 10. Also, one or more examples of the disclosed systems and methods for supporting a workpiece in a manufacturing environment may be utilized during production stages, i.e. component and subassembly manufacturing (block 1208) and system integration (block 1210), for example, by substantially expediting assembly of or reducing the cost of aircraft 1302. Similarly, one or more examples of the disclosed systems and methods for supporting a workpiece in a manufacturing environment may be utilized, for example and without limitation, while aircraft 1302 is in service (block 1214) and/or during maintenance and service (block 1216).

The disclosed systems and methods for supporting a workpiece in a manufacturing environment are described in the context of an aircraft. However, one of ordinary skill in the art will readily recognize that the disclosed systems and methods for supporting a workpiece in a manufacturing environment may be utilized for a variety of applications. For example, the disclosed systems and methods for supporting a workpiece in a manufacturing environment may be implemented in various types of vehicles including, e.g., helicopters, watercraft, passenger ships, automobiles, and the like.

Although various examples of the disclosed systems and methods for supporting a workpiece in a manufacturing environment have been shown and described, modifications may occur to those skilled in the art upon reading the specification. The present application includes such modifications and is limited only by the scope of the claims.

The disclosure also includes the following examples.

According to the invention, the method further comprises automatically upon the presence of the presence of the ready-to-move condition, generating a notification instructing all personnel to leave the initial work cell.

In a further elaboration according to the previous embodiment, the generating the notification comprises at least one of generating an audible notification, generating a visual notification, and generating a wireless broadcast.

In an embodiment of the method according to the invention, the ready-to-move condition is present when a signal is received indicating that work on the workpiece within the initial work cell is complete.

According to the invention, the ready-to-move condition is present when work on the workpiece within the initial work cell is complete and the initial work cell is devoid of personnel.

In an embodiment of the method according to the invention, the monitoring the initial work cell comprises monitoring at least one of a motion sensor, a laser sensor, a pressure sensor, a radar device, an RFID device, and a wireless device to ascertain presence of personnel within the initial work cell.

In an embodiment of the method according to the invention, the ready-to-receive condition is present when the subsequent work cell is devoid of a workpiece.

In an elaboration according to the previous embodiment, the method further comprises automatically upon the presence of the ready-to-receive condition, generating a notification instructing all personnel to leave the subsequent work cell.

In a further elaboration according to the previous embodiment, the generating the notification comprises at least one of generating an audible notification and generating a visual notification.

In an embodiment of the method according to the invention, the ready-to-receive condition is present when a signal is received indicating that the subsequent work cell is devoid of a workpiece.

In an embodiment of the method according to the invention, the ready-to-receive condition is present when the subsequent work cell is devoid of a workpiece and devoid of personnel.

In an embodiment of the method according to the invention, the monitoring the subsequent work cell comprises monitoring at least one of a laser sensor and a pressure sensor to ascertain presence of personnel within the subsequent work cell.

In an embodiment of the method according to the invention, the support beam comprises a first coupling feature, and wherein the interfacing the support beam with the gantry comprises engaging the first coupling feature on the support beam with a second coupling feature on the gantry.

In an elaboration according to the previous embodiment, the first coupling feature on the support beam comprises a male coupling portion, and the second coupling feature on the gantry comprises a female coupling portion.

|In an elaboration according to the previous embodiment, the interfacing the support beam with the gantry comprises sensing whether the second coupling feature on the gantry has securely engaged the first coupling feature on the support beam.

In an elaboration according to the previous embodiment, the interfacing the support beam with the gantry comprises interfacing using a feedback control loop.

In an embodiment of the method according to the invention, the support beam comprises at least two of a first coupling feature, and wherein the interfacing the support beam with the gantry comprises engaging the at least two of the first coupling feature on the support beam with at least two of a second coupling feature on the gantry.

In an embodiment of the method according to the invention, the gantry comprises a first elongated rail member, a second elongated rail member moveably engaged with the first elongated rail member, and a trolley moveably engaged with the second elongated rail member.

In an elaboration according to the previous embodiment, the plurality of work cells are arranged along a longitudinal manufacturing environment axis, and wherein the first elongated rail member is aligned with the longitudinal manufacturing environment axis.

In a further elaboration according to the previous embodiment, the second elongated rail member is transverse to the first elongated rail member and moves relative to the first elongated rail member along the longitudinal manufacturing environment axis.

In an embodiment of the method according to the invention, the moving the support beam with the gantry comprises moving the support beam in only two directions, the two directions defining a plane that is generally perpendicular to a vertical axis of the manufacturing environment.

In an elaboration according to the previous embodiment, the interfacing the support beam with the gantry comprises raising the support beam along the vertical axis into engagement with the gantry.

In an embodiment of the method according to the invention, the method further comprises, once the support beam is in the subsequent work cell, positioning the support beam onto a first frame assembly and a second frame assembly.

In an elaboration according to the previous embodiment, the first frame assembly is spaced a distance apart from the second frame assembly, and wherein the distance is at least about 2 meters.

In an elaboration according to the previous embodiment, the support beam is elongated along a longitudinal support beam axis and comprises a first end portion and a second end portion longitudinally opposed from the first end portion, the support beam comprises a first beam-side indexing feature proximate the first end portion and a second beam-side indexing feature proximate the second end portion, the first frame assembly comprises a first base portion, a first riser portion defining a first vertical axis, and a first carriage, the first carriage being connected to the first riser portion and moveable relative to the first riser portion along the first vertical axis, wherein the first carriage comprises a first frame-side indexing feature configured to engage with the first beam-side indexing feature, and the second frame assembly comprises a second base portion, a second riser portion defining a second vertical axis, and a second carriage, the second carriage being connected to the second riser portion and moveable relative to the second riser portion along the second vertical axis, wherein the second carriage comprises a second frame-side indexing feature configured to engage with the second beam-side indexing feature.

In an elaboration of the previous embodiment, the first beam-side indexing feature comprises a first male indexing feature, the first frame-side indexing feature comprises a first female indexing feature sized and shaped to closely receive the first male indexing feature, the positioning the support beam onto the first frame assembly comprises inserting the first male indexing feature into the first female indexing feature, the second beam-side indexing feature comprises a second male indexing feature, the second frame-side indexing feature comprises a second female indexing feature sized and shaped to closely receive the second male indexing feature, and the positioning the support beam onto the second frame assembly comprises inserting the second male indexing feature into the second female indexing feature.

In a further elaboration according to the previous embodiment, the first male indexing feature comprises a first ball member, the first female indexing feature comprises a first socket member, the second male indexing feature comprises a second ball member, and the second female indexing feature comprises a second socket member.

In an embodiment of the method according to the invention, the method further comprises, automatically upon the presence of the presence of the ready-to-move condition, actuating personnel lockouts to inhibit ingress of personnel into the initial work cell.

In an embodiment of the method according to the invention, the method further comprises, automatically upon the presence of the presence of the ready-to-receive condition, actuating personnel lockouts to inhibit ingress of personnel into the subsequent work cell.

In an embodiment of the method according to the invention, the method further comprises monitoring the subsequent work cell for presence of a second ready-to-move condition, monitoring a still subsequent work cell for presence of a second ready-to-receive condition, and, when both the second ready-to-move condition and the second ready-to-receive condition are present, interfacing the support beam with the gantry, and after the interfacing, moving the support beam with the gantry from the subsequent work cell to the still subsequent work cell.

In an embodiment of the method according to the invention, the method further comprises, once all work on the workpiece within the manufacturing environment is complete, separating the workpiece from the support beam.

In an elaboration according to the previous embodiment, the method further comprises supporting a second workpiece on the support beam.

In an embodiment of the method according to the invention, the plurality of work cells comprise at least one of a trimming cell, a sanding cell, a washing cell, a non-destructive inspection cell, a painting cell, and a drilling cell, and an assembling cell.

In an embodiment of the method according to the invention, the plurality of work cells comprise a trimming cell, a sanding cell, a washing cell, a non-destructive inspection cell, a painting cell, and a drilling cell, and an assembling cell.

In an embodiment of the method according to the invention, the workpiece is a wing panel of an aircraft.

In an embodiment of the method according to the invention, the workpiece comprises a composite material, the composite material comprising a reinforcement material embedded in a polymeric matrix material.

In an embodiment of the method according to the invention, the workpiece is suspended from the support beam by a hanger.

In an embodiment of the method according to the invention, the support beam comprises a truss.

In an embodiment of the method according to the invention, the support beam comprises a metallic material and is rigid.

In a second example, a method for transporting a workpiece from an initial work cell to a subsequent work cell in a manufacturing environment is disclosed, the method comprising a plurality of work cells, the workpiece being supported by a support beam, the method comprising:
- monitoring the initial work cell for presence of a ready-to-move condition, wherein the ready-to-move condition is present when work on the workpiece within the initial work cell is complete and the initial work cell is devoid of personnel;
- monitoring the subsequent work cell for presence of a ready-to-receive condition, wherein the ready-to-receive condition is present when the subsequent work cell is devoid of a workpiece and devoid of personnel;
- when both the ready-to-move condition and the ready-to-receive condition are present, engaging a first coupling feature on the support beam with a second coupling feature on a gantry; and
- after the engaging the first coupling feature on the support beam with the second coupling feature on the gantry, moving the support beam with the gantry from the initial work cell to the subsequent work cell.

In an embodiment of the method according to the invention, the moving comprises moving the support beam in only two directions, the two directions defining a plane that is generally perpendicular to a vertical axis of the manufacturing environment.

In an example, a system for transporting a workpiece from an initial work cell to a subsequent work cell in a manufacturing environment comprising a plurality of work cells is disclosed, the workpiece being supported by a support beam, the system comprising:
- an initial work cell sensor positioned to monitor the initial work cell for presence of a ready-to-move condition;
- a subsequent work cell sensor positioned to monitor the subsequent work cell for presence of a ready-to-receive condition; and
- a gantry configured to interface with the support beam and move the support beam from the initial work cell to the subsequent work cell once both the ready-to-move condition and the ready-to-receive condition are present.

In an embodiment of the system according to the invention, the initial work cell sensor comprises at least one of a motion sensor, a laser sensor, a pressure sensor, a radar device, an RFID device, and a wireless device.

In an embodiment of the system according to the invention, the subsequent work cell sensor comprises at least one of a motion sensor, a laser sensor, a pressure sensor, a radar device, an RFID device, and a wireless device.

In an embodiment of the system according to the invention, the support beam comprises a first coupling feature and the gantry comprises a second coupling feature, and wherein the gantry interfaces with the support beam by engaging the first coupling feature with the second coupling feature.

In an embodiment of the system according to the invention, the gantry comprises a first elongated rail member, a second elongated rail member moveably engaged with the first elongated rail member, and a trolley moveably engaged with the second elongated rail member.

In an elaboration according to the previous embodiment of the system, the plurality of work cells is arranged along a longitudinal manufacturing environment axis, and wherein the first elongated rail member is aligned with the longitudinal manufacturing environment axis.

In a further elaboration according to the previous embodiment of the system, the second elongated rail member is transverse to the first elongated rail member and moves relative to the first elongated rail member along the longitudinal manufacturing environment axis.

In an embodiment of the system according to the invention, the gantry is configured to move the support beam in only two directions, the two directions defining a plane that is generally perpendicular to a vertical axis of the manufacturing environment.

## Claims

1. A method for transporting a workpiece from an initial work cell to a subsequent work cell in a manufacturing environment comprising a plurality of work cells, the workpiece being supported by a support beam, the method comprising:
- monitoring (610) the initial work cell for presence of a ready-to-move condition;
- monitoring (620) the subsequent work cell for presence of a ready-to-receive condition;
- when both the ready-to-move condition and the ready-to-receive condition are present, interfacing (630) the support beam with a gantry; and
- after the interfacing, moving (640) the support beam with the gantry from the initial work cell to the subsequent work cell;
wherein the ready-to-move condition is present when work on the workpiece within the initial work cell is complete and the method further comprises, automatically upon the presence of the presence of the ready-to-move condition, generating (615) a notification instructing all personnel to leave the initial work cell; or
wherein the ready-to-move condition is present when work on the workpiece within the initial work cell is complete and the initial work cell is devoid of personnel.

2. The method of claim 1, wherein the monitoring (610) the initial work cell comprises monitoring at least one of a motion sensor, a laser sensor, a pressure sensor, a radar device, an RFID device, and a wireless device to ascertain presence of personnel within the initial work cell; and/or wherein the monitoring (615) the subsequent work cell comprises monitoring at least one of a laser sensor and a pressure sensor to ascertain presence of personnel within the subsequent work cell; and/or wherein the generating the notification comprises at least one of generating (615a) an audible notification, generating (615b) a visual notification, and generating (615c) a wireless broadcast.

3. The method of claim **1,** wherein the ready-to-receive condition is present when:
- the subsequent work cell is devoid of a workpiece, and optionally further comprising, automatically upon the presence of the ready-to-receive condition, generating (625) a notification instructing all personnel to leave the subsequent work cell, and wherein further optionally the generating (625) the notification comprises at least one of generating an audible notification (625a) and generating (625b) a visual notification; or
- a signal is received indicating that the subsequent work cell is devoid of a workpiece; or
- the subsequent work cell is devoid of a workpiece and devoid of personnel.

4. The method of claim **1,** wherein the support beam comprises a first coupling feature, and wherein the interfacing (630) the support beam with the gantry comprises engaging the first coupling feature on the support beam with a second coupling feature on the gantry, and optionally wherein:
- the first coupling feature on the support beam comprises a male coupling portion, and the second coupling feature on the gantry comprises a female coupling portion; and/or
- the interfacing (630) the support beam with the gantry comprises sensing whether the second coupling feature on the gantry has securely engaged the first coupling feature on the support beam; and/or
- the interfacing (630) the support beam with the gantry comprises interfacing using a feedback control loop

5. The method of claim **1,** wherein the support beam comprises at least two of a first coupling feature, and wherein the interfacing (630) the support beam with the gantry comprises engaging (632) the at least two of the first coupling feature on the support beam with at least two of a second coupling feature on the gantry; and/or
wherein the gantry comprises a first elongated rail member, a second elongated rail member moveably engaged with the first elongated rail member, and a trolley moveably engaged with the second elongated rail member, and optionally wherein the plurality of work cells are arranged along a longitudinal manufacturing environment axis, and wherein the first elongated rail member is aligned with the longitudinal manufacturing environment axis, and further optionally wherein the second elongated rail member is transverse to the first elongated rail member and moves relative to the first elongated rail member along the longitudinal manufacturing environment axis.

6. The method of claim **1,** wherein the moving (640) the support beam with the gantry comprises moving (640) the support beam in only two directions, the two directions defining a plane that is generally perpendicular to a vertical axis of the manufacturing environment, and optionally wherein the interfacing (630) the support beam with the gantry comprises raising the support beam along the vertical axis into engagement with the gantry.

7. The method of claim **1,** further comprising, once the support beam is in the subsequent work cell, positioning (645) the support beam onto a first frame assembly and a second frame assembly, and preferably:
wherein the first frame assembly is spaced a distance apart from the second frame assembly, and wherein the distance is at least about 2 meters; and/or
wherein the support beam is elongated along a longitudinal support beam axis and comprises a first end portion and a second end portion longitudinally opposed from the first end portion, the support beam comprises a first beam-side indexing feature proximate the first end portion and a second beam-side indexing feature proximate the second end portion, the first frame assembly comprises a first base portion, a first riser portion defining a first vertical axis, and a first carriage, the first carriage being connected to the first riser portion and moveable relative to the first riser portion along the first vertical axis, wherein the first carriage comprises a first frame-side indexing feature configured to engage with the first beam-side indexing feature, and the second frame assembly comprises a second base portion, a second riser portion defining a second vertical axis, and a second carriage, the second carriage being connected to the second riser portion and moveable relative to the second riser portion along the second vertical axis, wherein the second carriage comprises a second frame-side indexing feature configured to engage with the second beam-side indexing feature, and optionally wherein the first beam-side indexing feature comprises a first male indexing feature, the first frame-side indexing feature comprises a first female indexing feature sized and shaped to closely receive the first male indexing feature, the positioning the support beam onto the first frame assembly comprises inserting the first male indexing feature into the first female indexing feature, the second beam-side indexing feature comprises a second male indexing feature, the second frame-side indexing feature comprises a second female indexing feature sized and shaped to closely receive the second male indexing feature, and the positioning the support beam onto the second frame assembly comprises inserting the second male indexing feature into the second female indexing feature, and further optionally wherein the first male indexing feature comprises a first ball member, the first female indexing feature comprises a first socket member, the second male indexing feature comprises a second ball member, and the second female indexing feature comprises a second socket member.

8. The method of claim 1, further comprising:
- automatically upon the presence of the presence of the ready-to-move condition, actuating (670) personnel lockouts to inhibit ingress of personnel into the initial work cell; and/or
- automatically upon the presence of the presence of the ready-to-receive condition, actuating (670) personnel lockouts to inhibit ingress of personnel into the subsequent work cell.

9. The method of claim 1, further comprising:
- monitoring (610a) the subsequent work cell for presence of a second ready-to-move condition;
- monitoring (620a) a still subsequent work cell for presence of a second ready-to-receive condition;
- when both the second ready-to-move condition and the second ready-to-receive condition are present, interfacing (630) the support beam with the gantry; and
- after the interfacing (630), moving (640) the support beam with the gantry from the subsequent work cell to the still subsequent work cell.
and/or further comprising once all work on the workpiece within the manufacturing environment is complete, separating (650) the workpiece from the support beam; and optionally further comprising supporting a second workpiece on the support beam.

10. The method of claim 1, wherein the plurality of work cells comprise at least one of a trimming cell, a sanding cell, a washing cell, a non-destructive inspection cell, a painting cell, and a drilling cell, and an assembling cell, and preferably wherein the plurality of work cells comprise a trimming cell, a sanding cell, a washing cell, a non-destructive inspection cell, a painting cell, and a drilling cell, and an assembling cell.

11. The method of claim 1:
- wherein the workpiece:
~ is a wing panel of an aircraft; and/or
~ comprises a composite material, the composite material comprising a reinforcement material embedded in a polymeric matrix material; and/or
~ is suspended from the support beam by a hanger;
and/or
- wherein the support beam comprises a truss and/or comprises a metallic material and is rigid.

12. The method of claim 1:
- wherein the ready-to-move condition is present when work on the workpiece within the initial work cell is complete and the initial work cell is devoid of personnel;
- wherein the ready-to-receive condition is present when the subsequent work cell is devoid of a workpiece and devoid of personnel;
- comprising, when both the ready-to-move condition and the ready-to-receive condition are present, engaging (632) a first coupling feature on the support beam with a second coupling feature on a gantry; and
- comprising, after the engaging (632) the first coupling feature on the support beam with the second coupling feature on the gantry, moving (640) the support beam with the gantry from the initial work cell to the subsequent work cell; and
optionally wherein the moving (640) comprises moving the support beam in only two directions, the two directions defining a plane that is generally perpendicular to a vertical axis of the manufacturing environment.

13. A system (100) for transporting a workpiece (50) from an initial work cell (30a) to a subsequent work cell (30b) in a manufacturing environment (10) comprising a plurality of work cells (30), the workpiece (50) being supported by a support beam (110), the system comprising:
- an initial work cell sensor (185) positioned to monitor the initial work cell (30a) for presence of a ready-to-move condition;
- a subsequent work cell sensor (195) positioned to monitor the subsequent work cell for presence of a ready-to-receive condition; and
- a gantry (200) configured to interface with the support beam (110) and move the support beam (110) from the initial work cell (30a) to the subsequent work cell (30b) once both the ready-to-move condition and the ready-to-receive condition are present.

14. The system of claim 13, wherein:
- the initial work cell sensor (185) comprises at least one of a motion sensor (183), a laser sensor (181), a pressure sensor (187), a radar device (189), an RFID device (191), and a wireless device (193); and/or
- the subsequent work cell sensor (195) comprises at least one of a motion sensor (183), a laser sensor (181), a pressure sensor (187), a radar device (189), an RFID device (191), and a wireless device (193); and/or
- the support beam (110) comprises a first coupling feature (122) and the gantry (200) comprises a second coupling feature (124), and wherein the gantry (200) interfaces with the support beam (110) by engaging the first coupling feature (122) with the second coupling feature (124); and/or
- the gantry (200) is configured to move the support beam (110) in only two directions, the two directions defining a plane (P) that is generally perpendicular to a vertical axis (V) of the manufacturing environment.

15. The system of claim 13, wherein the gantry (200) comprises:
- a first elongated rail member (210);
- a second elongated rail member (220) moveably engaged with the first elongated rail member (210); and
- a trolley (275) moveably engaged with the second elongated rail member (220); and
optionally wherein the plurality of work cells (30) is arranged along a longitudinal manufacturing environment axis (A), and wherein the first elongated rail member (210) is aligned with the longitudinal manufacturing environment axis (A), and
further optionally wherein the second elongated rail member (220) is transverse to the first elongated rail member (210) and moves relative to the first elongated rail member (210) along the longitudinal manufacturing environment axis (A).

## Patentansprüche

1. Verfahren zum Transportieren eines Werkstücks von einer anfänglichen Arbeitszelle zu einer nachfolgenden Arbeitszelle in einer Fertigungsumgebung, umfassend eine Vielzahl von Arbeitszellen, wobei das Werkstück durch einen Tragbalken getragen wird, das Verfahren umfassend:
- Überwachen (610) der anfänglichen Arbeitszelle auf ein Vorliegen eines bewegungsbereiten Zustands;
- Überwachen (620) der nachfolgenden Arbeitszelle auf das Vorliegen eines aufnahmebereiten Zustands;
- wenn sowohl der bewegungsbereite Zustand als auch der aufnahmebereite Zustand vorliegen, Verbinden (630) des Tragbalkens mit einem Portal; und
- nach dem Verbinden, Bewegen (640) des Tragbalkens mit dem Portal von der anfänglichen Arbeitszelle zu der nachfolgenden Arbeitszelle;
wobei der bewegungsbereite Zustand vorliegt, wenn eine Arbeit an dem Werkstück innerhalb der anfänglichen Arbeitszelle abgeschlossen ist, und das Verfahren ferner umfasst, automatisch bei dem Vorliegen des bewegungsbereiten Zustands, Generieren (615) einer Benachrichtigung, die ein gesamtes Personal anweist, die anfängliche Arbeitszelle zu verlassen; oder
wobei der bewegungsbereite Zustand vorliegt, wenn die Arbeit an dem Werkstück innerhalb der anfänglichen Arbeitszelle abgeschlossen ist und die anfängliche Arbeitszelle frei von Personal ist.

2. Verfahren nach Anspruch 1, wobei das Überwachen (610) der anfänglichen Arbeitszelle das Überwachen mindestens eines von einem Bewegungssensor, einem Lasersensor, einem Drucksensor, einer Radarvorrichtung, einer RFID-Vorrichtung und einer drahtlosen Vorrichtung umfasst, um eine Anwesenheit von Personal innerhalb der anfänglichen Arbeitszelle festzustellen; und/oder wobei das Überwachen (615) der nachfolgenden Arbeitszelle das Überwachen mindestens eines von einem Lasersensor und einem Drucksensor umfasst, um die Anwesenheit von Personal innerhalb der nachfolgenden Arbeitszelle festzustellen; und/oder wobei das Generieren der Benachrichtigung mindestens eines von dem Generieren (615a) einer akustischen Benachrichtigung, dem Generieren (615b) einer visuellen Benachrichtigung und dem Generieren (615c) eines drahtlosen Rundrufs umfasst.

3. Verfahren nach Anspruch 1, wobei der aufnahmebereite Zustand vorliegt, wenn:
- die nachfolgende Arbeitszelle frei von einem Werkstück ist, und optional ferner umfassend, automatisch bei dem Vorliegen des aufnahmebereiten Zustands, Generieren (625) einer Benachrichtigung, die das gesamte Personal anweist, die nachfolgende Arbeitszelle zu verlassen, und wobei optional das Generieren (625) der Benachrichtigung ferner mindestens eines von dem Generieren einer akustischen Benachrichtigung (625a) und dem Generieren (625b) einer visuellen Benachrichtigung umfasst; oder
- ein Signal empfangen wird, das angibt, dass die nachfolgende Arbeitszelle frei von einem Werkstück ist; oder
- die anschließende Arbeitszelle frei von einem Werkstück und frei von Personal ist.

4. Verfahren nach Anspruch 1, wobei der Tragbalken ein erstes Kopplungsmerkmal umfasst und wobei das Verbinden (630) des Tragbalkens mit dem Portal ein Ineingriffbringen des ersten Kopplungsmerkmals an dem Tragbalken mit einem zweiten Kopplungsmerkmal an dem Portal umfasst und wobei optional:
- das erste Kopplungsmerkmal an dem Tragbalken einen männlichen Kopplungsabschnitt umfasst und das zweite Kopplungsmerkmal an dem Portal einen weiblichen Kopplungsabschnitt umfasst; und/oder
- das Verbinden (630) des Tragbalkens mit dem Portal ein Erfassen umfasst, ob das zweite Kopplungsmerkmal an dem Portal das erste Kopplungsmerkmal an dem Tragbalken sicher in Eingriff genommen hat; und/oder
- das Verbinden (630) des Tragbalkens mit dem Portal das Verbinden unter Verwendung eines Regelkreises umfasst.

5. Verfahren nach Anspruch 1, wobei der Tragbalken mindestens zwei eines ersten Kopplungsmerkmals umfasst und wobei das Verbinden (630) des Tragbalkens mit dem Portal das Ineingriffbringen (632) der mindestens zwei des ersten Kopplungsmerkmals an dem Tragbalken mit mindestens zwei eines zweiten Kopplungsmerkmals an dem Portal umfasst; und/oder
wobei das Portal ein erstes längliches Schienenelement, ein zweites längliches Schienenelement, das mit dem ersten länglichen Schienenelement bewegbar in Eingriff gebracht ist, und eine Laufkatze umfasst, die mit dem zweiten länglichen Schienenelement bewegbar in Eingriff gebracht ist, und wobei optional die Vielzahl von Arbeitszellen entlang einer Längsfertigungsumgebungsachse eingerichtet ist und wobei das erste längliche Schienenelement mit der Längsfertigungsumgebungsachse ausgerichtet ist und wobei ferner optional das zweite längliche Schienenelement quer zu dem ersten länglichen Schienenelement verläuft und sich relativ zu dem ersten länglichen Schienenelement entlang der Längsfertigungsumgebungsachse bewegt.

6. Verfahren nach Anspruch 1, wobei das Bewegen (640) des Tragbalkens mit dem Portal das Bewegen (640) des Tragbalkens in nur zwei Richtungen umfasst, wobei die zwei Richtungen eine Ebene definieren, die im Allgemeinen senkrecht zu einer vertikalen Achse der Fertigungsumgebung verläuft, und wobei optional das Verbinden (630) des Tragbalkens mit dem Portal ein Anheben des Tragbalkens entlang der vertikalen Achse in Eingriff mit dem Portal umfasst.

7. Verfahren nach Anspruch 1, ferner umfassend, sobald sich der Tragbalken in der nachfolgenden Arbeitszelle befindet, ein Positionieren (645) des Tragbalkens auf einer ersten Rahmenanordnung und einer zweiten Rahmenanordnung, und vorzugsweise:
wobei die erste Rahmenanordnung um eine Entfernung von der zweiten Rahmenanordnung beabstandet ist und wobei die Entfernung mindestens etwa 2 Meter beträgt; und/oder
wobei der Tragbalken entlang einer Längsachse des Tragbalkens länglich ist und einen ersten Endabschnitt und einen zweiten Endabschnitt, der dem ersten Endabschnitt längs gegenüberliegt, umfasst, wobei der Tragbalken ein erstes balkenseitiges Indexierungsmerkmal nahe des ersten Endabschnitts und ein zweites balkenseitiges Indexierungsmerkmal nahe des zweiten Endabschnitts umfasst, wobei die erste Rahmenanordnung einen ersten Basisabschnitt, einen ersten Steigabschnitt, der eine erste vertikale Achse definiert, und einen ersten Schlitten umfasst, wobei der erste Schlitten mit dem ersten Steigabschnitt verbunden und relativ zu dem ersten Steigabschnitt entlang der ersten vertikalen Achse bewegbar ist, wobei der erste Schlitten ein erstes rahmenseitiges Indexierungsmerkmal umfasst, das konfiguriert ist, um mit dem ersten balkenseitigen Indexierungsmerkmal in Eingriff zu stehen, und die zweite Rahmenanordnung einen zweiten Basisabschnitt, einen zweiten Steigabschnitt, der eine zweite vertikale Achse definiert, und einen zweiten Schlitten umfasst, wobei der zweite Schlitten mit dem zweiten Steigabschnitt verbunden und relativ zu dem zweiten Steigabschnitt entlang der zweiten vertikalen Achse bewegbar ist, wobei der zweite Schlitten ein zweites rahmenseitiges Indexierungsmerkmal umfasst, das konfiguriert ist, um mit dem zweiten balkenseitigen Indexierungsmerkmal in Eingriff zu stehen, und wobei optional das erste balkenseitige Indexierungsmerkmal ein erstes männliches Indexierungsmerkmal umfasst, wobei das erste rahmenseitige Indexierungsmerkmal ein erstes weibliches Indexierungsmerkmal umfasst, das bemessen und geformt ist, um das erste männliche Indexierungsmerkmal eng aufzunehmen, wobei das Positionieren des Tragbalkens auf der ersten Rahmenanordnung ein Einsetzen des ersten männlichen Indexierungsmerkmals in das erste weibliche Indexierungsmerkmal umfasst, wobei das zweite balkenseitige Indexierungsmerkmal ein zweites männliches Indexierungsmerkmal umfasst, wobei das zweite rahmenseitige Indexierungsmerkmal ein zweites weibliches Indexierungsmerkmal umfasst, das bemessen und geformt ist, um das zweite männliche Indexierungsmerkmal eng aufzunehmen, und das Positionieren des Tragbalkens auf der zweiten Rahmenanordnung das Einsetzen des zweiten männlichen Indexierungsmerkmals in das zweite weibliche Indexierungsmerkmal umfasst, und wobei ferner optional das erste männliche Indexierungsmerkmal ein erstes Kugelelement umfasst, das erste weibliche Indexierungsmerkmal ein erstes Pfannenelement umfasst, das zweite männliche Indexierungsmerkmal ein zweites Kugelelement umfasst und das zweite weibliche Indexierungsmerkmal ein zweites Pfannenelement umfasst.

8. Verfahren nach Anspruch 1, ferner umfassend:
- automatisch bei dem Vorliegen des bewegungsbereiten Zustands, Auslösen (670) von Personalsperren, um einen Eintritt von Personal in die anfängliche Arbeitszelle zu verhindern; und/oder
- automatisch bei dem Vorliegen des aufnahmebereiten Zustand, Auslösen (670) von Personalsperren, um den Eintritt von Personal in die nachfolgende Arbeitszelle zu verhindern.

9. Verfahren nach Anspruch 1, ferner umfassend:
- Überwachen (610a) der nachfolgenden Arbeitszelle auf das Vorliegen eines zweiten bewegungsbereiten Zustands;
- Überwachen (620a) einer noch nachfolgenden Arbeitszelle auf das Vorliegen eines zweiten aufnahmebereiten Zustands;
- wenn sowohl der zweite bewegungsbereite Zustand als auch der zweite aufnahmebereite Zustand vorliegen, Verbinden (630) des Tragbalkens mit dem Portal; und
- nach dem Verbinden (630), Bewegen (640) des Tragbalkens mit dem Portal von der nachfolgenden Arbeitszelle zu der noch nachfolgenden Arbeitszelle,
und/oder ferner umfassend, sobald alle Arbeiten an dem Werkstück innerhalb der Fertigungsumgebung abgeschlossen sind, ein Trennen (650) des Werkstücks von dem Träger; und optional ferner umfassend ein Tragen eines zweiten Werkstücks an dem Tragbalken.

10. Verfahren nach Anspruch 1, wobei die Vielzahl von Arbeitszellen mindestens eine von einer Trimmzelle, einer Schleifzelle, einer Waschzelle, einer Zelle für eine zerstörungsfreie Prüfung, einer Lackierzelle und einer Bohrzelle und einer Anordnungszelle umfasst, und wobei die Vielzahl von Arbeitszellen vorzugsweise eine Trimmzelle, eine Schleifzelle, eine Waschzelle, eine Zelle für die zerstörungsfreie Prüfung, eine Lackierzelle und eine Bohrzelle und eine Anordnungszelle umfasst.

11. Verfahren nach Anspruch 1:
- wobei das Werkstück:
~ eine Tragfläche eines Luftfahrzeugs ist; und/oder
∼ ein Verbundmaterial umfasst, das Verbundmaterial umfassend ein Verstärkungsmaterial, das in ein Polymermatrixmaterial eingebettet ist; und/oder
∼ durch einen Hänger an dem Tragbalken aufgehängt ist;
und/oder
- wobei der Tragbalken ein Gerippe umfasst und/oder ein Metallmaterial umfasst und starr ist.

12. Verfahren nach Anspruch 1:
- wobei der bewegungsbereite Zustand vorliegt, wenn die Arbeit an dem Werkstück innerhalb der anfänglichen Arbeitszelle abgeschlossen ist und die anfängliche Arbeitszelle frei von Personal ist;
- wobei der aufnahmebereite Zustand vorliegt, wenn die nachfolgende Arbeitszelle frei von einem Werkstück und frei von Personal ist;
- umfassend, wenn sowohl der bewegungsbereite Zustand als auch der aufnahmebereite Zustand vorliegen, das Ineingriffbringen (632) eines ersten Kopplungsmerkmals an dem Tragbalken mit einem zweiten Kopplungsmerkmal an einem Portal; und
- umfassend, nach dem Ineingriffbringen (632) des ersten Kopplungsmerkmals an dem Tragbalken mit dem zweiten Kopplungsmerkmal an dem Portal, das Bewegen (640) des Tragbalkens mit dem Portal von der anfänglichen Arbeitszelle zu der nachfolgenden Arbeitszelle; und
wobei optional das Bewegen (640) das Bewegen des Tragbalkens in nur zwei Richtungen umfasst, wobei die zwei Richtungen eine Ebene definieren, die im Allgemeinen senkrecht zu einer vertikalen Achse der Fertigungsumgebung verläuft.

13. System (100) zum Transportieren eines Werkstücks (50) von einer anfänglichen Arbeitszelle (30a) zu einer nachfolgenden Arbeitszelle (30b) in einer Fertigungsumgebung (10), umfassend eine Vielzahl von Arbeitszellen (30), wobei das Werkstück (50) durch einen Tragbalken (110) getragen wird, das System umfassend:
- einen Sensor (185) für die anfängliche Arbeitszelle, der positioniert ist, um die anfängliche Arbeitszelle (30a) auf das Vorliegen eines bewegungsbereiten Zustands zu überwachen;
- einen Sensor (195) für die nachfolgende Arbeitszelle, der positioniert ist, um die nachfolgende Arbeitszelle auf das Vorliegen eines aufnahmebereiten Zustands zu überwachen; und
- ein Portal (200), das konfiguriert ist, um mit dem Tragbalken (110) verbunden zu sein und den Tragbalken (110) von der anfänglichen Arbeitszelle (30a) zu der nächsten Arbeitszelle (30b) zu bewegen, sobald sowohl der bewegungsbereite Zustand als auch der aufnahmebereite Zustand vorliegen.

14. System nach Anspruch 13, wobei:
- der Sensor (185) für die anfängliche Arbeitszelle mindestens eines von einem Bewegungssensor (183), einem Lasersensor (181), einem Drucksensor (187), einer Radarvorrichtung (189), einer RFID-Vorrichtung (191) und einer drahtlosen Vorrichtung (193) umfasst; und/oder
- der Sensor (195) für die nachfolgende Arbeitszelle mindestens eines von einem Bewegungssensor (183), einem Lasersensor (181), einem Drucksensor (187), einer Radarvorrichtung (189), einer RFID-Vorrichtung (191) und einer drahtlosen Vorrichtung (193) umfasst; und/oder
- der Tragbalken (110) ein erstes Kopplungsmerkmal (122) umfasst und das Portal (200) ein zweites Kopplungsmerkmal (124) umfasst und wobei das Portal (200) mit dem Tragbalken (110) durch Ineingriffbringen des ersten Kopplungsmerkmals (122) mit dem zweiten Kopplungsmerkmal (124) verbunden ist; und/oder
- das Portal (200) konfiguriert ist, um den Tragbalken (110) in nur zwei Richtungen zu bewegen, wobei die zwei Richtungen eine Ebene (P) definieren, die im Allgemeinen senkrecht zu einer vertikalen Achse (V) der Fertigungsumgebung verläuft.

15. System nach Anspruch 13, wobei das Portal (200) umfasst:
- ein erstes längliches Schienenelement (210);
- ein zweites längliches Schienenelement (220), das mit dem ersten länglichen Schienenelement (210) bewegbar in Eingriff gebracht ist; und
- eine Laufkatze (275), die mit dem zweiten länglichen Schienenelement (220) bewegbar in Eingriff gebracht ist; und
wobei optional die Vielzahl von Arbeitszellen (30) entlang einer Längsfertigungsumgebungsachse (A) eingerichtet ist und wobei das erste längliche Schienenelement (210) mit der Längsfertigungsumgebungsachse (A) ausgerichtet ist und
wobei ferner optional das zweite längliche Schienenelement (220) quer zu dem ersten länglichen Schienenelement (210) verläuft und sich relativ zu dem ersten länglichen Schienenelement (210) entlang der Längsfertigungsumgebungsachse (A) bewegt.

## Revendications

1. Procédé pour le transport d'une pièce à usiner d'une cellule de travail initiale à une cellule de travail suivante dans un environnement de fabrication comprenant une pluralité de cellules de travail, la pièce à usiner étant supportée par une poutre de support, le procédé comprenant :
- la surveillance (610) de la cellule de travail initiale pour ce qui est de la présence d'un état prêt à déplacer ;
- la surveillance (620) de la cellule de travail suivante pour ce qui est de la présence d'un état prêt à recevoir ;
- lorsque l'état prêt à déplacer et l'état prêt à recevoir sont tous deux présents, la liaison par interface (630) de la poutre de support avec un portique ; et
- après la liaison par interface, le déplacement (640) de la poutre de support avec le portique de la cellule de travail initiale à la cellule de travail suivante ;
dans lequel l'état prêt à déplacer est présent lorsque le travail sur la pièce à usiner au sein de la cellule de travail initiale est terminé et le procédé comprend en outre, automatiquement sur présence de l'état prêt à déplacer, la génération (615) d'une notification ordonnant à tout le personnel de quitter la cellule de travail initiale ; ou
dans lequel l'état prêt à déplacer est présent lorsque le travail sur la pièce à usiner au sein de la cellule de travail initiale est terminé et que la cellule de travail initiale est dépourvue de personnel.

2. Procédé selon la revendication 1, dans lequel la surveillance (610) de la cellule de travail initiale comprend la surveillance d'au moins l'un parmi un capteur de mouvement, un capteur laser, un capteur de pression, un dispositif radar, un dispositif RFID, et un dispositif sans fil pour vérifier la présence de personnel au sein de la cellule de travail initiale ; et/ou dans lequel la surveillance (615) de la cellule de travail suivante comprend la surveillance d'au moins l'un parmi un capteur laser et un capteur de pression pour vérifier la présence de personnel au sein de la cellule de travail suivante ; et/ou dans lequel la génération de la notification comprend au moins l'une parmi la génération (615a) d'une notification sonore, la génération (615b) d'une notification visuelle, et la génération (615c) d'une diffusion sans fil.

3. Procédé selon la revendication 1, dans lequel l'état prêt à recevoir est présent lorsque :
- la cellule de travail suivante est dépourvue de pièce à usiner, et comprenant en outre éventuellement, automatiquement sur présence de l'état prêt à recevoir, la génération (625) d'une notification ordonnant à tout le personnel de quitter la cellule de travail suivante, et dans lequel en outre éventuellement la génération (625) de la notification comprend au moins l'une parmi la génération d'une notification sonore (625a) et la génération (625b) d'une notification visuelle ; ou
- un signal est reçu indiquant que la cellule de travail suivante est dépourvue de pièce à usiner ; ou
- la cellule de travail suivante est dépourvue de pièce à usiner et de personnel.

4. Procédé selon la revendication 1, dans lequel la poutre de support comprend un premier élément d'accouplement, et dans lequel la liaison par interface (630) de la poutre de support avec le portique comprend la mise en prise du premier élément d'accouplement sur la poutre de support avec un second élément d'accouplement sur le portique, et éventuellement dans lequel :
- le premier élément d'accouplement sur la poutre de support comprend une partie d'accouplement mâle, et le second élément d'accouplement sur le portique comprend une partie d'accouplement femelle ; et/ou
- la liaison par interface (630) de la poutre de support avec le portique comprend le fait de détecter si le second élément d'accouplement du portique est fermement en prise avec le premier élément d'accouplement sur la poutre de support ; et/ou
- la liaison par interface (630) de la poutre de support avec le portique comprend la liaison par interface à l'aide d'une boucle de contrôle à asservissement.

5. Procédé selon la revendication 1, dans lequel la poutre de support comprend au moins deux parmi un premier élément d'accouplement, et dans lequel la liaison par interface (630) de la poutre de support avec le portique comprend la mise en prise (632) des au moins deux parmi le premier élément d'accouplement sur la poutre de support avec au moins deux parmi un second élément d'accouplement sur le portique ; et/ou
dans lequel le portique comprend un premier organe de rail allongé, un second organe de rail allongé en prise de manière mobile avec le premier organe de rail allongé, et un wagonnet en prise de manière mobile avec le second organe de rail allongé, et éventuellement dans lequel la pluralité de cellules de travail sont agencées le long d'un axe d'environnement de fabrication longitudinal, et dans lequel le premier organe de rail allongé est aligné avec l'axe d'environnement de fabrication longitudinal, et en outre éventuellement dans lequel le second organe de rail allongé est transversal au premier organe de rail allongé et se déplace par rapport au premier organe de rail allongé le long de l'axe d'environnement de fabrication longitudinal.

6. Procédé selon la revendication 1, dans lequel le déplacement (640) de la poutre de support avec le portique comprend le déplacement (640) de la poutre de support dans seulement deux directions, les deux directions définissant un plan qui est généralement perpendiculaire à un axe vertical de l'environnement de fabrication, et éventuellement dans lequel la liaison par interface (630) de la poutre de support avec le portique comprend l'élévation de la poutre de support le long de l'axe vertical pour la mise en prise avec le portique.

7. Procédé selon la revendication 1, comprenant en outre, une fois que la poutre de support est dans la cellule de travail suivante, le positionnement (645) de la poutre de support sur un premier ensemble cadre et un second ensemble cadre, et de préférence :
dans lequel le premier ensemble cadre est espacé d'une distance du second ensemble cadre, et dans lequel la distance est d'au moins environ 2 mètres ; et/ou
dans lequel la poutre de support est allongée le long d'un axe de poutre de support longitudinal et comprend une première partie d'extrémité et une seconde partie d'extrémité opposée longitudinalement à la première partie d'extrémité, la poutre de support comprend un premier élément d'indexation côté poutre à proximité de la première partie d'extrémité et un second élément d'indexation côté poutre à proximité de la seconde partie d'extrémité, le premier ensemble cadre comprend une première partie de base, une première partie de montée définissant un premier axe vertical, et un premier chariot, le premier chariot étant relié à la première partie de montée et pouvant être déplacé par rapport à la première partie de montée le long du premier axe vertical, dans lequel le premier chariot comprend un premier élément d'indexation côté cadre conçu pour venir en prise avec le premier élément d'indexation côté poutre, et le second ensemble cadre comprend une seconde partie de base, une seconde partie de montée définissant un second axe vertical, et un second chariot, le second chariot étant relié à la seconde partie de montée et pouvant être déplacé par rapport à la seconde partie de montée le long du second axe vertical, dans lequel le second chariot comprend un second élément d'indexation côté cadre conçu pour venir en prise avec le second élément d'indexation côté poutre, et éventuellement dans lequel le premier élément d'indexation côté poutre comprend un premier élément d'indexation mâle, le premier élément d'indexation côté cadre comprend un premier élément d'indexation femelle dimensionné et formé pour recevoir étroitement le premier élément d'indexation mâle, le positionnement de la poutre de support sur le premier ensemble cadre comprend l'insertion du premier élément d'indexation mâle dans le premier élément d'indexation femelle, le second élément d'indexation côté poutre comprend un second élément d'indexation mâle, le second élément d'indexation côté cadre comprend un second élément d'indexation femelle dimensionné et formé pour recevoir étroitement le second élément d'indexation mâle, et le positionnement de la poutre de support sur le second ensemble cadre comprend l'insertion du second élément d'indexation mâle dans le second élément d'indexation femelle, et en outre éventuellement dans lequel le premier élément d'indexation mâle comprend un premier organe sphérique, le premier élément d'indexation femelle comprend un premier organe d'emboîtement, le second élément d'indexation mâle comprend un second organe sphérique, et le second élément d'indexation femelle comprend un second organe d'emboîtement.

8. Procédé selon la revendication 1, comprenant en outre :
- automatiquement sur présence de la présence de l'état prêt à déplacer, l'actionnement (670) de dispositifs de blocage de personnel pour empêcher l'entrée de personnel dans la cellule de travail initiale ; et/ou
- automatiquement sur présence de la présence de l'état prêt à recevoir, l'actionnement (670) de dispositifs de blocage de personnel pour empêcher l'entrée de personnel dans la cellule de travail suivante.

9. Procédé selon la revendication 1, comprenant en outre :
- la surveillance (610a) de la cellule de travail suivante pour ce qui est de la présence d'un second état prêt à déplacer ;
- la surveillance (620a) d'une cellule de travail suivante pour ce qui est de la présence d'un second état prêt à recevoir ;
- lorsque le second état prêt à déplacer et le second état prêt à recevoir sont tous deux présents, la liaison par interface (630) de la poutre de support avec le portique ; et
- après la liaison par interface (630), le déplacement (640) de la poutre de support avec le portique de la cellule de travail suivante à la cellule de travail encore suivante,
et/ou comprenant en outre une fois que tout le travail sur la pièce à usiner au sein de l'environnement de fabrication est terminé, la séparation (650) de la pièce à usiner de la poutre de support ; et éventuellement comprenant en outre le support d'une seconde pièce à usiner sur la poutre de support.

10. Procédé selon la revendication 1, dans lequel la pluralité de cellules de travail comprend au moins l'une parmi une cellule de coupe, une cellule de ponçage, une cellule de lavage, une cellule d'inspection non destructive, une cellule de peinture, et une cellule de perçage, et une cellule d'assemblage, et de préférence dans lequel la pluralité de cellules de travail comprend une cellule de coupe, une cellule de ponçage, une cellule de lavage, une cellule d'inspection non destructive, une cellule de peinture, et une cellule de perçage, et une cellule d'assemblage.

11. Procédé selon la revendication 1 :
- dans lequel la pièce à usiner :
∼ est un panneau d'aile d'un aéronef ; et/ou
- comprend un matériau composite, le matériau composite comprenant un matériau de renforcement noyé dans un matériau de matrice polymère ; et/ou
~ est suspendu à la poutre de support par un cintre ;
et/ou
- dans lequel la poutre de support comprend une armature et/ou comprend un matériau métallique et est rigide.

12. Procédé selon la revendication 1 :
- dans lequel l'état prêt à déplacer est présent lorsque le travail sur la pièce à usiner au sein de la cellule de travail initiale est terminé et que la cellule de travail initiale est dépourvue de personnel ;
- dans lequel l'état prêt à recevoir est présent lorsque la cellule de travail suivante est dépourvue de pièce à usiner et de personnel ;
- comprenant, lorsque l'état prêt à déplacer et l'état prêt à recevoir sont tous deux présents, la mise en prise (632) d'un premier élément d'accouplement sur la poutre de support avec un second élément d'accouplement sur un portique ; et
- comprenant, après la mise en prise (632) du premier élément d'accouplement sur la poutre de support avec le second élément d'accouplement sur le portique, le déplacement (640) de la poutre de support avec le portique de la cellule de travail initiale à la cellule de travail suivante ; et
éventuellement dans lequel le déplacement (640) comprend le déplacement de la poutre de support dans seulement deux directions, les deux directions définissant un plan qui est généralement perpendiculaire à un axe vertical de l'environnement de fabrication.

13. Système (100) pour le transport d'une pièce à usiner (50) d'une cellule de travail initiale (30a) à une cellule de travail suivante (30b) dans un environnement de fabrication (10) comprenant une pluralité de cellules de travail (30), la pièce à usiner (50) étant supportée par une poutre de support (110), le système comprenant :
- un capteur de cellule de travail initiale (185) positionné pour surveiller la cellule de travail initiale (30a) pour ce qui est de la présence d'un état prêt à déplacer ;
- un capteur de cellule de travail suivante (195) positionné pour surveiller la cellule de travail suivante pour ce qui est de la présence d'un état prêt à recevoir ; et
- un portique (200) conçu pour être lié par interface avec la poutre de support (110) et déplacer la poutre de support (110) de la cellule de travail initiale (30a) à la cellule de travail suivante (30b) une fois que l'état prêt à déplacer et l'état prêt à recevoir sont tous deux présents.

14. Système selon la revendication 13, dans lequel :
- le capteur de cellule de travail initiale (185) comprend au moins l'un parmi un capteur de mouvement (183), un capteur laser (181), un capteur de pression (187), un dispositif radar (189), un dispositif RFID (191), et un dispositif sans fil (193) ; et/ou
- le capteur de cellule de travail suivante (195) comprend au moins l'un parmi un capteur de mouvement (183), un capteur laser (181), un capteur de pression (187), un dispositif radar (189), un dispositif RFID (191), et un dispositif sans fil (193) ; et/ou
- la poutre de support (110) comprend un premier élément d'accouplement (122) et le portique (200) comprend un second élément d'accouplement (124), et dans lequel le portique (200) est lié par interface avec la poutre de support (110) en mettant en prise le premier élément d'accouplement (122) avec le second élément d'accouplement (124) ; et/ou
- le portique (200) est conçu pour déplacer la poutre de support (110) dans seulement deux directions, les deux directions définissant un plan (P) qui est généralement perpendiculaire à un axe vertical (V) de l'environnement de fabrication.

15. Système selon la revendication 13, dans lequel le portique (200) comprend :
- un premier organe de rail allongé (210) ;
- un second organe de rail allongé (220) en prise de manière mobile avec le premier organe de rail allongé (210) ; et
- un wagonnet (275) en prise de manière mobile avec le second organe de rail allongé (220) ; et
éventuellement dans lequel la pluralité de cellules de travail (30) est agencée le long d'un axe d'environnement de fabrication longitudinal (A), et dans lequel le premier organe de rail allongé (210) est aligné avec l'axe d'environnement de fabrication longitudinal (A), et
en outre éventuellement dans lequel le second organe de rail allongé (220) est transversal au premier organe de rail allongé (210) et se déplace par rapport au premier organe de rail allongé (210) le long de l'axe d'environnement de fabrication longitudinal (A).
